# EUROPÄISCHE PATENTSCHRIFT

(11) **EP 3 162 207 B1**
(45) Veröffentlichungstag und Bekanntmachung des Hinweises auf die Patenterteilung: **26.02.2020**
(21) Anmeldenummer: 16401074.6
(22) Anmeldetag: 21.10.2016
(51) Int. Cl.: A01M 7/00

(54) **LANDWIRTSCHAFTLICHE FELDSPRITZE**
AGRICULTURAL FIELD SPRAYING DEVICE
PULVÉRISATEUR AGRICOLE

(30) Priorität: 29.10.2015 DE 102015118470
(43) Veröffentlichungstag der Anmeldung: 03.05.2017
(73) Patentinhaber: Amazonen-Werke H. Dreyer GmbH & Co. KG, 49205 Hasbergen (DE)
(72) Erfinder: Ehlen, Volker, 49205 Hasbergen (DE)

(56) Entgegenhaltungen:
- DE-A1- 3 121 619
- DE-A1-102013 107 445

## Beschreibung

Die Erfindung betrifft eine landwirtschaftliche Feldspritze gemäß dem Oberbegriff des Patentanspruches 1.

Eine derartige landwirtschaftliche Feldspritze ist in DE 10 2013 107 445 A1 beschrieben. Sie weist unter anderem einen Flüssigkeitstank zur Aufnahme eines auszubringenden Pflanzenschutzgemisches, einen Frischwassertank, einen Einspülbehälter mit dem darin aufgenommenen Pflanzenschutzmittel, motorisch angetriebene Pumpen, eine Mehrzahl, teilweise über einen Stellmotor einstellbare Regelventile, eine Dosierarmatur, vorwiegend manuell einstellbare Umschaltventile, Teilbreitenschaltventile mit motorischen Einstellgliedern und Spritzdüsen sowie zu den einzelnen Teilbreitenleitungen führende Spritzleitungen, also insgesamt eine Vielzahl unterschiedlicher Fluidleitungen auf. An dem Umschaltventil können noch weitere Fluidleitungen zum externen Anschluss von Wassertanks, Vorrichtungen zum Ansaugen von Wasser aus Gewässern, zum Anschluss des Frischwassertanks sowie beispielsweise eine Ablaufleitung angeschlossen sein.

Die aus der Druckschrift bekannte Feldspritze verfügt ferner über eine elektronische Steuer- und/oder Regeleinrichtung, die als Bordcomputer ausgebildet ist und zur Steuerung verschiedener Funktionen der Feldspritze dient, so werden beispielsweise über Durchflussmesser die Volumenströme des Spritzmittelkreislaufs erfasst und weiter verarbeitet. Ebenso kann der Bordcomputer dazu dienen, einzelnen Ventile oder Sprühdüsen anzusteuern. In einer direkt zu dem Flüssigkeitstank führenden Fluidleitung, die als Saugleitung ausgeführt ist, befindet sich eine Venturieinrichtung. Auf diese Weise wird über die Saugleitung Flüssigkeit aus dem Einspülbehälter abgesaugt und in den Flüssigkeitstank verbracht.

Insgesamt weist die landwirtschaftliche Feldspritze nach der DE 10 2013 107 445 A1 eine erhebliche Vielzahl einzelner Fluidleitungen und mit diesen strömungsleitend verbundene Fluidbauteile auf, so dass damit ein sehr komplexes, wenig kompaktes System gegeben ist, das einen dementsprechenden Bauraum erfordert und bei dem mehrere Einstellungen manuell vorgenommen werden müssen.

Die Aufgabenstellung der Erfindung besteht darin, eine landwirtschaftliche Feldspritze zur Verfügung zu stellen, die insgesamt einen vereinfachten, kompakten Aufbau aufweist.

Diese Aufgabenstellung wird mit den Merkmalen des Patentanspruches 1 gelöst. Weitere Ausgestaltungen der Erfindung sind darüber hinaus in den sich anschließenden Unteransprüchen widergegeben.

Erfindungsgemäß sind in dem Fluidblock mehrere Fluidbauteile zu separat oder gruppenweise ansteuerbaren Funktionseinheiten zusammengefasst. Auf diese Weise lässt sich die Anzahl der vorhandenen Einzelteile einer Feldspritze in erheblichem Maße reduzieren, so dass diese insgesamt kompakter gestaltet werden kann, als bisher bekannte Ausführungen.

Eine landwirtschaftliche Feldspritze mit einem Spritzmittelkreislauf, mit Fluidbauteilen, die mittels vorhandener Fluidleitungen strömungsleitend miteinander gekoppelt sind, wurde erfindungsgemäß dahingehend weitergebildet, dass die Feldspritze zumindest einen Fluidblock aufweist, in den ein Kanalsystem integriert ist und der an wenigstens einer seiner Außenseiten mindestens zwei Schnittstellen zum Anschließen je wenigstens eines Fluidbauteils aufweist.

Der wesentliche Vorzug der Erfindung besteht in der kompakten Ausführung des Fluidblocks, dessen integraler Bestandteil das Kanalsystem ist. Die Anzahl der einzelnen Fluidbauteile und Fluidleitungen kann auf diese Weise in entscheidendem Maße reduziert und auf engstem Raum komprimiert werden, ohne dass dadurch die Funktionsfähigkeit der landwirtschaftlichen Feldspritze beeinträchtigt wird. Über die am Fluidblock vorhandenen Schnittstellen können Fluidbauteile mit dem im Fluidblock vorhandenen Kanalsystem gekoppelt werden, was eine sehr einfache Möglichkeit zur Herstellung strömungsleitender Verbindungen darstellt.

Entsprechend einer ersten Ausgestaltung der Erfindung wird vorgeschlagen, dass das Kanalsystem aus einer Vielzahl einzelner, komprimiert zusammengefasster Fluidleitungen besteht. Anders ausgedrückt weist der Fluidblock die bislang einzeln zu verlegenden und damit platzintensiven Fluidleitungen in einer kompakten Form auf. Auf diese Weise lässt sich die Feldspritze insgesamt stark vereinfachen. Zudem können wertvoller Bauraum und Gewicht eingespart werden.

Die an dem Fluidblock vorhandenen Schnittstellen dienen in bevorzugter Weise als Eingänge beziehungsweise Ausgänge für mit dem Spritzmittelkreislauf verbindbare Fluidleitungen und/oder Förderaggregate und/oder Verbrauchsaggregate, Ventile, Drosseln und/oder Filter, etc..

Werden diese Schnittstellen zudem als Anschlussöffnung, vorzugsweise als Bohrung ausgeführt, beziehungsweise mit einem Anschlussgewinde oder einem Anschlusselement ausgestattet, wobei es sich bei dem Anschlusselement vorzugsweise um einen Adapter oder Flansch handeln kann, so lässt sich damit eine Vielzahl unterschiedlicher Anschlussmöglichkeiten an den Fluidblock realisieren. Je nach Ausbildung des Kanalsystems innerhalb des Fluidblocks sind somit die für den Betrieb der Feldspritze erforderlichen Aggregate auf einfache und zuverlässige Weise mit dem Fluidblock koppelbar.

Natürlich besteht die Möglichkeit, den Fluidblock in herkömmlicher Weise aus einem metallischen Werkstoff, also beispielsweise aus einem Gusswerkstoff wie Aluminium oder Stahl herzustellen. Alternativ hierzu kann der Fluidblock jedoch auch aus einem Kunststoff bestehen, was einen erheblichen Gewichtsvorteil darstellt. Die Ausführung des komplexen Fluidblocks lässt sich beispielsweise problemlos mit einem 3-D-Drucker erzeugen. Derartige Drucker sind heute nicht nur in der Lage, Kunststoffe, sondern vielmehr auch metallische Werkstoffe zu verarbeiten. Dies kann für die erfindungsgemäße Lösung in vorteilhafter Weise genutzt werden.

Dementsprechend geht eine Weiterführung dieses Lösungsgedankens dahin, dass es sich bei dem Fluidblock um einen mittels eines 3-D-Druckers oder durch ein Gussverfahren und/oder mittels eines spanabhebenden Fertigungsverfahrens hergestellten Fluidblock handelt. Je nach Fertigungsaufwand können die genannten Fertigungsverfahren auch miteinander kombiniert zum Einsatz kommen, um einen Fluidblock der erfindungsgemäßen Bauart zu erzeugen.

Unter Fluidbauteilen werden im erfindungsgemäßen Sinne hauptsächlich Ventile, Fittinge, Sammelstücke oder aktive oder passive hydraulische Bauelemente verstanden.

Im erfindungsgemäßen Sinne ist es von besonderem Vorteil, wenn die zu Funktionseinheiten zusammengefassten Fluidbauteile elektrisch ansteuerbar sind. Damit ergeben sich kurze Ansteuerungs- und Reaktionszeiten. Darüber hinaus ist diese Art der Ansteuerung einfach zu handhaben.

Weitere Einzelheiten der Erfindung sind der Beispielsbeschreibung und den Zeichnungen zu entnehmen. Die Zeichnungen zeigen:
- Fig. 1:: einen aus dem Stand der Technik bekannten Flüssigkeitsplan einer Feldspritze als Prinzipdarstellung,
- Fig. 2:: beispielhaft einen Flüssigkeitsplan einer Feldspritze nach der Erfindung,
- Fig. 3:: den Schaltplan des Fluidblocks I aus Fig. 2,
- Fig. 4:: den Schaltplan des Fluidblocks II aus Fig. 2
- und Fig. 5:: den Schaltplan des Fluidblocks III aus Fig. 2.

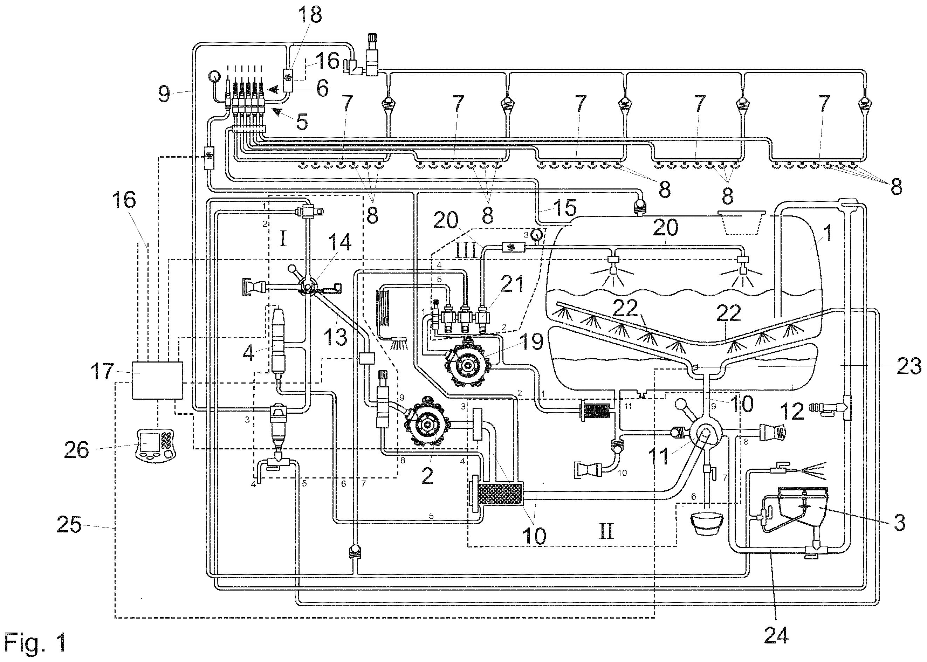

Aus der Darstellung in Fig. 1 geht eine landwirtschaftliche Feldspritze hervor, wie sie in dieser Ausführung bereits im Einsatz und daher bekannt ist. Die Feldspritze weist eine Vielzahl einzelner Fluidbauteile und Fluidleitungen auf, so dass sie insgesamt aufwändig gestaltet ist. Zentrales Element ist hierbei zunächst ein Flüssigkeitstank 1 zur Aufnahme des auszubringenden Pflanzenschutzgemisches, das in diesem Fall durch Mischung eines Pflanzenschutzmittels mit frischem Wasser hergestellt wird. Das Pflanzenschutzmittel wird dem dargestellten Spritzmittelkreislauf über einen Einspülbehälter 3 zugeführt, in den das Pflanzenschutzmittel eingefüllt wird. Ein Frischwassertank 12 wird separat mit frischem Wasser befüllt, wobei dieses zum Verdünnen von Restmengen oder zum Reinigen benötigt wird. Eine motorisch angetriebene Pumpe 2 ist saugseitig mit einer Saugleitung 10 verbunden, die unter Zwischenschaltung eines nicht näher bezeichneten Filters und eines zentralen Umschaltventils 11 mit dem unteren Bereich des Flüssigkeitstanks 1 gekoppelt ist. Die Pumpe 2 führt das aus dem Flüssigkeitstank 1 abgesaugte Pflanzenschutzgemisch über Teilbreitenschaltventile 5 zu Teilbreitenleitungen 7 mit Spritzdüsen 8, über die das Pflanzenschutzgemisch auf das Feld abgegeben wird. An dem Umschaltventil 11 sind noch weitere Leitungen, beispielsweise zum externen Anschluss von Wassertanks, Vorrichtungen zum Ansaugen von Wasser aus Gewässern, zum Anschluss des Frischwasserbehälters 12 sowie eine Ablaufleitung angeschlossen. Auf der Druckseite der Pumpe 2 ist eine Druckleitung 13 angeordnet, die unter Zwischenschaltung eines weiteren Umschaltventils 14 zu einem Überdruckventil 4 einer Dosierarmatur und weiteren Einrichtungen der Feldspritze führt. Diese Pumpe dient auch dem Betrieb eines Rührsystems 22 im Flüssigkeitstank 1. Verschiedene Rücklaufleitungen der Teilbreitenschaltventile 5 sind zu einer Sammelrücklaufleitung 15 zusammengefasst, die wiederum in den Flüssigkeitstank 1 mündet. Die Spritzleitung 9 speist unter Zwischenschaltung einer Gruppe von Steuerelementen 6 und über das Überdruckventil 4 die Teilbreitenleitungen 7, die strömungsleitend mit den Spritzdüsen 8 gekoppelt sind. Eine Signalleitung 16, die mit der als Bordcomputer 17 ausgebildeten elektronischen Steuer- und/oder Regeleinrichtung verbunden ist, erfasst über einen Durchflussmesser 18 den Volumenstrom des Pflanzenschutzmittels. Der Bordcomputer 17 umfasst darüber hinaus auch eine Ein- und Ausgabeeinheit 26, über die beispielsweise Daten eingegeben oder erfasste Werte optisch angezeigt werden können. Unterhalb des Flüssigkeitstanks 1 ist bei dem dargestellten Beispiel der Frischwasserbehälter 12 zur Aufnahme von Frischwasser angeordnet. Eine zweite Pumpe 19 ist saugseitig mit dem Frischwassertank 12 beziehungsweise externen Anschlüssen verbunden. Über Schaltventile 21 können Funktionen wie "Außenwascheinrichtung", "Reinigungseinrichtungen am Einspülbehälter" sowie die "Innenreinigung" des Flüssigkeitstanks 1 angesteuert werden. Im unteren Auslaufbereich weist der Flüssigkeitstank 1 ferner einen Sensor 23 auf, der über die durch gestrichelte Linien angedeutete Datenleitung 25 ein Messsignal an den Bordcomputer 17 weitergibt, dass einen zu niedrigen Flüssigkeitsspiegel innerhalb des Flüssigkeitstanks 1 signalisiert.

An den unteren Bereich des Einspülbehälters 3 ist eine in den Flüssigkeitstank 1 einmündende Fluidleitung 24 angeschlossen. Über die Pumpe 2 und das Umschaltventil 14 wird druckseitig ein Injektor betrieben. Die Saugseite des Injektors ist mit dem Einspülbehälter 3 verbunden. Je nach Stellung des Umschaltventils 14 kann entweder Flüssigkeit aus dem Einspülbehälter 3 abgesaugt werden oder es kann zusätzlich über einen externen Anschluss Flüssigkeit zum Befüllen des Flüssigkeitstanks 1 angesaugt werden. Mit dieser Funktion ist es möglich, die Befüllleistung des Flüssigkeitstanks 1 über die Förderleistung der Pumpe 2 hinaus zu erhöhen.

In der direkt zu dem Flüssigkeitstank 1 führenden Saugleitung ist eine Venturieinrichtung angeordnet. Auf diese Weise kann über die Flüssigkeitspumpe 2 Flüssigkeit aus dem Einspülbehälter 3 abgesaugt und in den Flüssigkeitstank 1 verbracht werden.

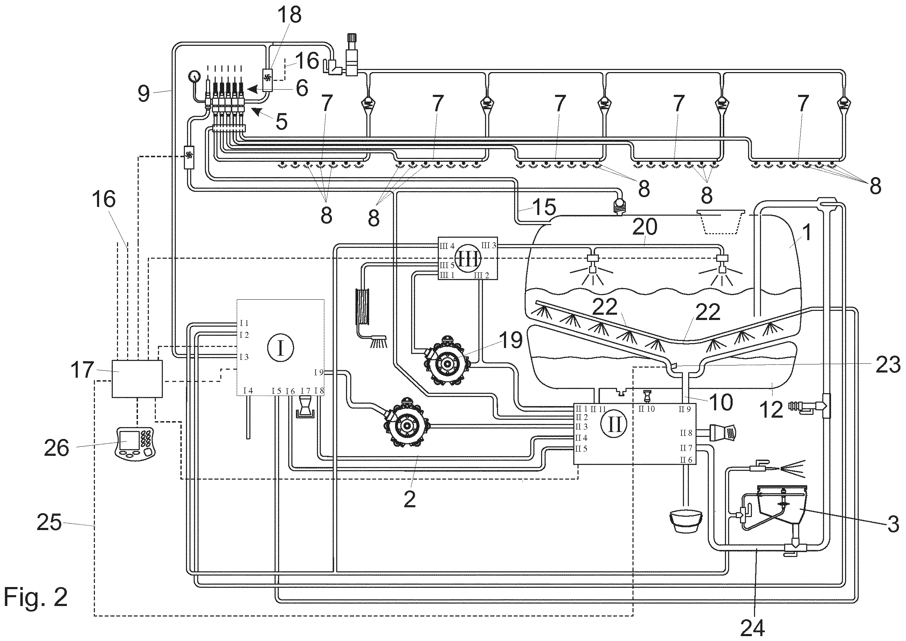

Die Darstellung in der Fig. 2 zeigt die in der Fig. 1 bereits durch gestrichelte Linien verdeutlichte Zusammenfassung mehrerer Fluidbauteile und Fluidleitungen in je einem Fluidblock I, II und III. Hieraus wird ersichtlich, dass beispielsweise in dem erfindungsgemäßen Fluidblock I neben verschiedenen Fluidleitungen, wie der Druckleitung 13 auch Fluidbauteile, wie das Überdruckventil 4 und weitere Schaltventile zu einem kompakten System zusammengefasst sind.

Ebenso wurden im Fluidblock II beispielsweise die Saugleitung 10, das Umschaltventil 11 verschiedene Filter sowie Regeleinrichtungen zusammengefasst.

Der Fluidblock III umfasst darüber hinaus ein Durchflussmessgerät, eine Druckmesseinrichtung sowie eine Gruppe von Schaltventilen 21, wie sie im Zusammenhang mit der Beschreibung der Fig. 1 bereits erläutert wurden. Bereits ein optischer Vergleich der Darstellungen der Figuren 1 und 2 zeigt deutlich, das durch die Zusammenfassung verschiedener Fluidleitungen und mehrerer Fluidbauteile innerhalb der Fluidblöcke I-III die Feldspritze insgesamt wesentlich kompakter und übersichtlicher gestaltet ist. Durch derartige Maßnahmen lassen sich Gewicht und Bauraum sparen.

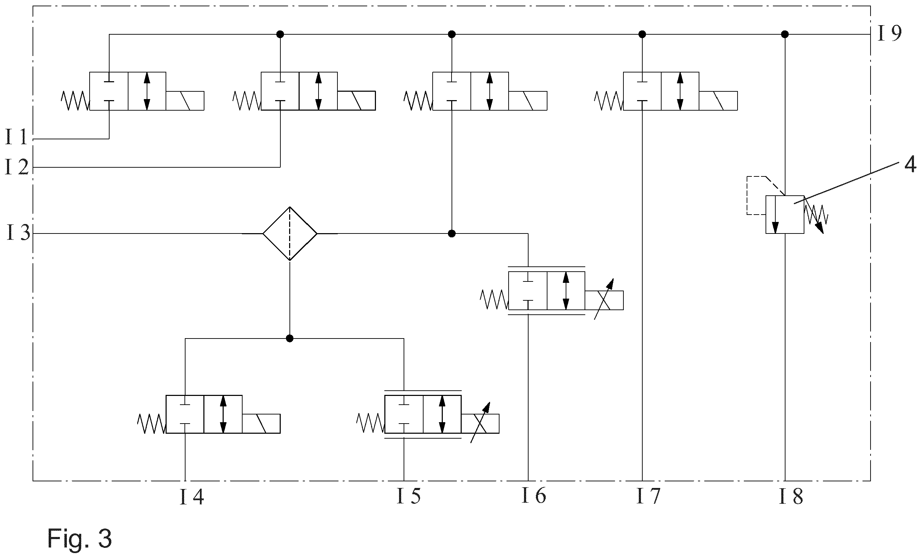

Die Figuren 3-5 zeigen noch einmal die Fluidblöcke I-III mit den darin zu Gruppen zusammengefassten Schaltventilen sowie den Fluidleitungen und weiteren Fluidbauteilen.

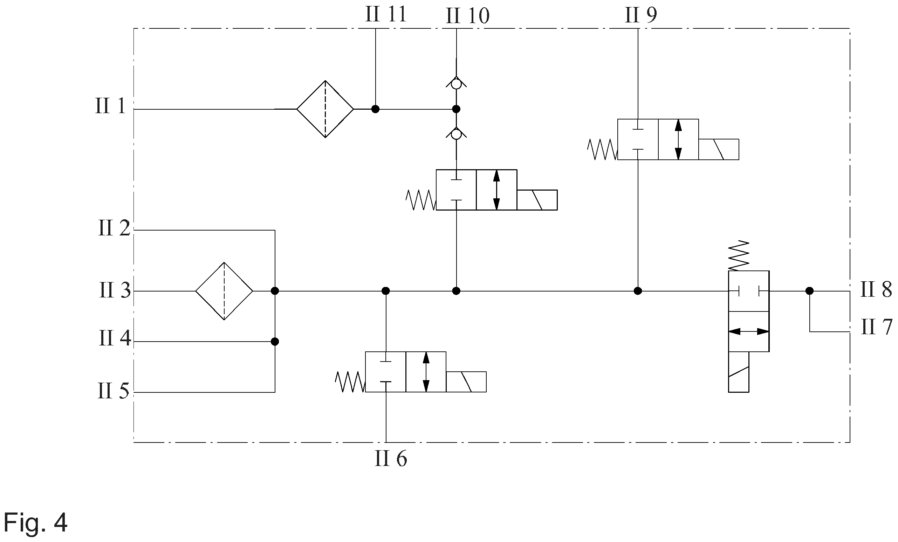

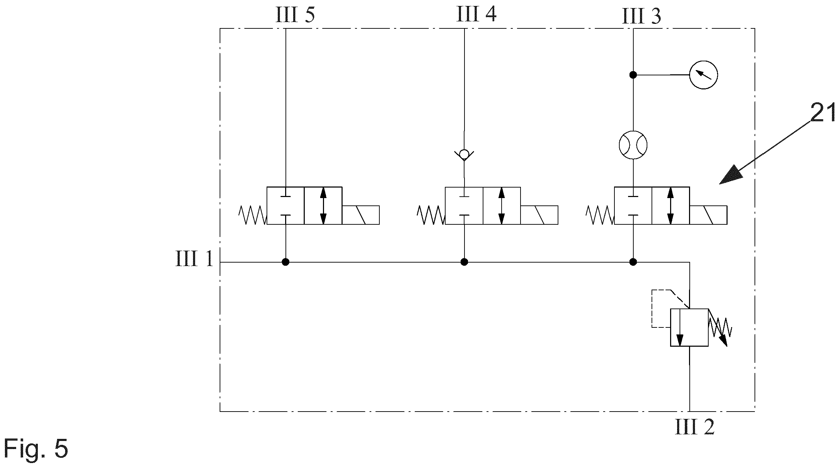

So zeigt die Fig. 3 den Fluidblock I, die Fig. 4 den Fluidblock II und die Fig. 5 den Fluidblock III.

In dem Fluidblock I ist dabei eine Gruppe von insgesamt vier einzelnen Ventilen zu einer Ventilgruppe zusammengefasst. Darüber hinaus ist in diesem Fluidblock I das Überdruckventil 4, ein nicht näher bezeichnete Filter und sind darüber hinaus insgesamt drei Magnetventile integriert.

In dem Fluidblock II gemäß Fig. 4 befinden sich insgesamt vier Magnetschaltventile und neben zahlreichen, kompakt zusammengefassten Fluidleitungen auch zwei nicht näher bezeichnete Filter.

Die Darstellung in Fig. 5 veranschaulicht den Fluidblock III mit diversen Fluidleitungen, einem Überdruckventil, einen Durchflussmessgerät, einer Druckmesseinrichtung sowie einer Gruppe von insgesamt drei Schaltventilen.

Die hier dargestellten Ventile bilden die Funktionen aus Fig. 1 ab. Es können aber auch andere Ventile verwendet werden, um die gleiche Funktion zu erreichen, so können beispielsweise 2 STK 2/2-Wegeventile durch 1 STK 4/3-Wegeventile ersetzt werden.

### BEZUGSZEICHENLISTE:

- 1: Flüssigkeitstank
- 2: Pumpe
- 3: Einspülbehälter
- 4: Überdruckventil
- 5: Teilbreitenschaltventile
- 6: Steuerelemente
- 7: Teilbreitenleitungen
- 8: Spritzdüsen
- 9: Spritzleitung
- 10: Saugleitung
- 11: zentrales Umschaltventil
- 12: Frischwasserbehälter
- 13: Druckleitung
- 14: Umschaltventil
- 15: Sammelrücklaufleitung
- 16: Signalleitung
- 17: Bordcomputer / Steuer- und/oder Regeleinrichtung
- 18: Durchflussmesser
- 19: Pumpe
- 20: Druckleitung
- 21: Schaltventile
- 22: Spül- und/oder Rührsystem
- 23: Sensor
- 24: Saugleitung
- 25: Datenleitung
- 26: Ein- und Ausgabeeinheit

## Patentansprüche

1. Landwirtschaftliche Feldspritze mit einem Spritzmittelkreislauf, mit Fluidbauteilen, die mittels vorhandener Fluidleitungen strömungsleitend miteinander gekoppelt sind,
**dadurch gekennzeichnet, dass** die Feldspritze zumindest einen Fluidblock (I, II, III) aufweist, in welchem mehrere Fluidbauteile zu separat oder gruppenweise ansteuerbaren Funktionseinheiten zusammengefasst sind, in den ein Kanalsystem integriert ist und der an wenigstens einer seiner Außenseiten mindestens zwei Schnittstellen zum Anschließen wenigstens je eines Fluidbauteils aufweist.

2. Landwirtschaftliche Feldspritze nach Anspruch 1,
**dadurch gekennzeichnet, dass** das Kanalsystem aus einer Vielzahl einzelner, komprimiert zusammengefasster Fluidleitungen besteht.

3. Landwirtschaftliche Feldspritze nach einem der vorstehend genannten Ansprüche, **dadurch gekennzeichnet, dass** mehrere Schnittstellen an dem Fluidblock (I, II, III) vorhanden sind und diese als Eingänge beziehungsweise Ausgänge für mit dem Spritzmittelkreislauf verbindbare Fluidleitungen und/oder Förderaggregate und/oder Verbrauchsaggregate ausgeführt sind.

4. Landwirtschaftliche Feldspritze nach einem der vorstehend genannten Ansprüche, **dadurch gekennzeichnet, dass** als Schnittstelle eine Anschlussöffnung, vorzugsweise eine Bohrung, ein Anschlussgewinde oder ein Anschlusselement, vorzugsweise ein Adapter oder Flansch, vorhanden ist.

5. Landwirtschaftliche Feldspritze nach einem der vorstehend genannten Ansprüche, **dadurch gekennzeichnet, dass** der Fluidblock (I, II, III) aus Metall oder Kunststoff besteht.

6. Landwirtschaftliche Feldspritze nach einem der vorstehend genannten Ansprüche, **dadurch gekennzeichnet, dass** es sich bei dem Fluidblock (I, II, III) um einen mittels eines 3-D-Druckers oder durch ein Gussverfahren und/oder mittels eines spanabhebenden Fertigungsverfahrens hergestellten Fluidblock (I, II, III) handelt.

7. Landwirtschaftliche Feldspritze nach einem der vorstehend genannten Ansprüche, **dadurch gekennzeichnet, dass** die Fluidbauteile Ventile, Fittinge, Sammelstücke oder aktive oder passive hydraulische Bauelemente sind.

8. Landwirtschaftliche Feldspritze nach einem der vorstehend genannten Ansprüche, **dadurch gekennzeichnet, dass** die zu Funktionseinheiten zusammengefassten Fluidbauteile elektrisch ansteuerbar sind.

## Claims

1. Agricultural field spraying device having a spraying agent circuit, having fluid components which are coupled to one another in a flow-conducting manner by means of provided fluid lines,
**characterized in that** the field spraying device has at least one fluid block (I, II, III), in which multiple fluid components are combined to form functional units which are able to be activated separately or in groups, into which a channel system is integrated and which has on at least one of its outer sides at least two interfaces for connecting at least in each case one fluid component.

2. Agricultural field spraying device according to Claim 1,
**characterized in that** the channel system consists of a multiplicity of individual fluid lines which are combined in a compressed manner.

3. Agricultural field spraying device according to either of the preceding claims,
**characterized in that** multiple interfaces are provided at the fluid block (I, II, III), and said interfaces are designed as inlets or outlets for fluid lines, and/or conveying units, and/or consumer units, which are able to be connected to the spraying agent circuit.

4. Agricultural field spraying device according to one of the preceding claims,
**characterized in that** a connection opening, preferably a bore, a connection thread or a connection element, preferably an adaptor or flange, is provided as an interface.

5. Agricultural field spraying device according to one of the preceding claims,
**characterized in that** the fluid block (I, II, III) consists of metal or plastic.

6. Agricultural field spraying device according to one of the preceding claims, **characterized in that** the fluid block (I, II, III) is a fluid block (I, II, III) produced by means of a 3D printer or by way of a casting process and/or by means of a chip-removing manufacturing process.

7. Agricultural field spraying device according to one of the preceding claims,
**characterized in that** the fluid components are valves, fittings, collection parts or active or passive hydraulic structural elements.

8. Agricultural field spraying device according to one of the preceding claims,
**characterized in that** the fluid components combined to form functional units are able to be activated electrically.

## Revendications

1. Pulvérisateur agricole comprenant un circuit d'agent de pulvérisation, comprenant des composants fluidiques qui sont couplés les uns aux autres de manière conductrice d'écoulement à l'aide de conduites fluidiques existantes,
**caractérisé en ce que** le pulvérisateur comporte au moins un bloc fluidique (I, II, III) dans lequel une pluralité de composants fluidiques sont regroupés pour former des unités fonctionnelles, qui peuvent être commandées séparément ou en groupes et dans lesquelles un système de canaux est intégré, et comporte au moins deux interfaces destinées à raccorder chacune au moins un composant fluidique.

2. Pulvérisateur agricole selon la revendication 1, **caractérisé en ce que** le système de canaux comprend une multitude de conduites fluidiques individuelles regroupées de manière comprimée.

3. Pulvérisateur agricole selon l'une des revendications précédentes, **caractérisé en ce qu'**une pluralité d'interfaces sont prévues au niveau du bloc fluidique (I, II, III) et celles-ci sont conçues comme des entrées ou sorties des conduites fluidiques et/ou des unités de transport et/ou des unités de consommation pouvant être reliées au circuit d'agent de pulvérisation.

4. Pulvérisateur agricole selon l'une des revendications précédentes, **caractérisé en ce que** l'interface est une ouverture de raccordement, de préférence un alésage, un filetage de raccordement ou un élément de raccordement, de préférence un adaptateur ou une bride.

5. Pulvérisateur agricole selon l'une des revendications précédentes, **caractérisé en ce que** le bloc fluidique (I, II, III) est en métal ou en matière synthétique.

6. Pulvérisateur agricole selon l'une des revendications précédentes, **caractérisé en ce que** le bloc fluidique (I, II, III) est un bloc fluidique (I, II, III) réalisé au moyen d'une imprimante 3-D ou par un procédé de coulée et/ou au moyen d'un procédé de fabrication par enlèvement de copeaux.

7. Pulvérisateur agricole selon l'une des revendications précédentes, **caractérisé en ce que** les composants fluidiques sont des vannes, des raccords, des collecteurs ou des composants hydrauliques actifs ou passifs.

8. Pulvérisateur agricole selon l'une des revendications précédentes, **caractérisé en ce que** les composants fluidiques regroupés en unités fonctionnelles peuvent être commandés électriquement.
